# EUROPÄISCHE PATENTSCHRIFT

(11) **EP 2 527 705 B1**
(45) Veröffentlichungstag und Bekanntmachung des Hinweises auf die Patenterteilung: **10.05.2017**
(21) Anmeldenummer: 12168101.9
(22) Anmeldetag: 15.05.2012
(51) Int. Cl.: F16L 55/052, F16L 55/054

(54) **Druckschwingungsdämpfer**
Pressure vibration damper
Amortisseur de vibrations de pression

(30) Priorität: 27.05.2011 DE 102011076646
(43) Veröffentlichungstag der Anmeldung: 28.11.2012
(73) Patentinhaber: MAHLE International GmbH, 70376 Stuttgart (DE)
(72) Erfinder: Zirkelbach, Thomas, 71732 Tamm (DE)
(74) Vertreter: BRP Renaud & Partner mbB Rechtsanwälte Patentanwälte Steuerberater

(56) Entgegenhaltungen:
- EP-A2- 1 002 984
- DE-A1- 3 544 368
- DE-A1-102009 004 706
- DE-B- 1 251 599
- FR-A5- 2 044 428
- US-A- 3 103 234
- US-A1- 2009 236 002

## Beschreibung

Die vorliegende Erfindung betrifft eine Filtereinrichtung für einen Schmierölkreislauf einer Brennkraftmaschine, mit einem Filtergehäuse, das eine Flüssigkeitsleitung aufweist und in das ein Druckschingungsdämpfer integriert ist.

In Flüssigkeitssystemen, in denen ein Flüssigkeitsmedium, also eine Flüssigkeit gefördert wird, kann es zu Druckschwingungen kommen. Derartige Druckschwingungen können bspw. durch eine Fördereinrichtung zum Antreiben der Flüssigkeit sowie durch Ventile zum Verändern eines durchströmbaren Querschnitts, insbesondere zum Freigeben und Sperren des durchströmbaren Querschnitts, ausgelöst werden. Diese Druckschwingungen können bspw. bei Dichtungen zu einer erhöhten Belastung, zu einem erhöhten Verschleiß und letztlich zu Leckagen, sowie durch eine verschlechterte Akustik zu Geräuschabstrahlung führen. Ebenso sind Anschlüsse und Verbindungen innerhalb des jeweiligen Flüssigkeitssystems durch die Druckschwingungen einer erhöhten Belastung ausgesetzt. Von besonderem Interesse sind im vorliegenden Zusammenhang Ölkreise oder Schmierölkreise von Brennkraftmaschinen bzw. von Kraftfahrzeugen, die bspw. Getriebeöl, Motoröl, Hydrauliköl, Bremsflüssigkeit oder andere Flüssigkeiten einer beliebigen anderen Flüssigkeitsanlage des Fahrzeugs.

Ein entsprechendes System ist in Dokument DE102009028164 A1 offenbart. Die vorliegende Erfindung beschäftigt sich mit dem Problem, für ein Druckschwingungen ausgesetztes Flüssigkeitssystem einen Weg aufzuzeigen, der den durch die Druckschwingungen bedingten Verschleiß sowie die Geräuschabstrahlung reduziert oder verhindert.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den jeweiligen Flüssigkeitskreis mit wenigstens einem Druckschwingungsdämpfer auszustatten.

Ein derartiger Druckschwingungsdämpfer kann die Amplitude der Druckschwingung signifikant reduzieren, wodurch die Spitzenbelastungen innerhalb des Flüssigkeitssystems reduziert werden können.

Ein derartiger Druckschwingungsdämpfer umfasst dabei z.B. einen Hohlkörper bzw. Hohlquerschnitt mit begrenzender Wand, vorzugsweise ein Rohr, insbesondere ein zylindrisches Rohr, zum Führen der Flüssigkeit und zum Einbinden des Druckschwingungsdämpfers in eine Flüssigkeitsleitung. Mit Hilfe des Hohlquerschnitts bzw. Rohrs kann der Druckschwingungsdämpfer somit in das jeweilige Flüssigkeitssystem eingebaut werden. Ferner kann der Druckschwingungsdämpfer ein Dämpfergehäuse aufweisen, welches den Hohlquerschnitt umhüllt und welches eine Dämpferstruktur enthält, die außerhalb des Hohlquerschnitts liegt. Durch die außerhalb des Hohlquerschnitts liegende Dämpferstruktur wird eine Beeinträchtigung des durchströmbaren Querschnitts des Hohlquerschnitts weitgehend vermieden, wodurch insbesondere eine Erhöhung des Durchströmungswiderstands des Hohlquerschnitts weitgehend vermieden werden kann.

Der Druckschwingungsdämpfer ist selbst Teil eines weiteren Gehäuses durch welches die Flüssigkeit strömt. Hierbei wird ein erfindungsgemäßer Druckschwingungsdämpfer in das Filtergehäuse in die Zu- oder/und Ablaufanschlüsse wie z.B. Anschlussstutzen integriert oder alternativ in die Gehäusewand selbst integriert. Je nach Art des weiteren Gehäuses kann auf ein Dämpfergehäuse verzichtet werden, das ist z.B. bei weiteren Gehäusen aus Metall oder Guss möglich.

Der Hohlquerschnitt des Druckschwingungsdämpfers ist ferner innerhalb des Dämpfergehäuses mit einem Kopplungsbereich ausgestattet, der so konzipiert ist, dass er eine Übertragung von Druckschwingungen von der durch den Hohlquerschnitt fließenden Flüssigkeit auf die Dämpferstruktur ermöglicht. Durch diesen Kopplungsbereich kann die Dämpferstruktur mit der im Hohlquerschnitt geführten Flüssigkeit zusammenwirken, um die darin auftretenden Druckschwingungen zu bedämpfen.

Entsprechend einer ersten prinzipiellen Ausführungsform kann der Kopplungsbereich des Hohlquerschnitts für die Flüssigkeit durchlässig ausgestaltet sein. In diesem Fall ist die Dämpferstruktur der Flüssigkeit ausgesetzt, also bezüglich der Flüssigkeit nass angeordnet. Insbesondere handelt es sich bei der Dämpferstruktur dann um eine Dissipationsstruktur, die von der Flüssigkeit umgeben und/oder durchsetzt ist. Die in der Flüssigkeit auftretenden Druckschwingungen können sich durch die Flüssigkeit in die Dissipationsstruktur ausbreiten und werden darin dissipiert, also mehr oder weniger durch Reibung aufgezehrt.

Zweckmäßig handelt es sich bei der Dissipationsstruktur um eine offenporige Porenstruktur. Bei einer offenporigen Porenstruktur dringt die Flüssigkeit bis in die Poren ein, so dass sich auch die Druckschwingungen bis in die Poren hinein ausbreiten können und darin reflektiert und ihrer Energie entzogen werden können.

Zweckmäßig kann die Porenstruktur eine Kugelstruktur oder eine Hohlkugelstruktur oder eine Schaumstruktur oder eine Zellstruktur sein. Ebenso sind grundsätzlich beliebige Kombinationen der vorstehenden Porenstrukturen möglich. Ferner sind die Übergänge zwischen den unterschiedlichen Porenstrukturen fließend, so dass bspw. auch eine geschäumte Zellstruktur denkbar ist. Die Porenstrukturen können gesintert sein oder als Metallschäume oder Kunststoffschäume hergestellt sein.

Entsprechend einer vorteilhaften Weiterbildung kann der Kopplungsbereich durch eine Unterbrechung der Wand des Hohlquerschnitts gebildet sein, wobei die Dissipationsstruktur in diesem Fall selbsttragend ausgestaltet ist. Auf diese Weise lässt sich die Dissipationsstruktur einfach im Dämpfergehäuse positionieren und fixieren. Insbesondere kann die Dissipationsstruktur im Bereich der Unterbrechung den durchströmbaren Querschnitt des Hohlquerschnitts nachbilden, so dass der Hohlquerschnitt auch im Bereich der Unterbrechung keine wesentliche Veränderung seines durchströmbaren Querschnitts besitzt. Hierdurch kann der Durchströmungswiderstand des Hohlquerschnitts und somit des Druckschwingungsdämpfers vergleichsweise niedrig gehalten werden. Durch die Unterbrechung des Hohlquerschnitts können die Druckschwingungen besonders einfach und ungestört die Dissipationsstruktur beaufschlagen.

Bei einer anderen Weiterbildung kann der Kopplungsbereich durch eine Perforation der Wand des Hohlquerschnitts gebildet sein. Durch die Ausgestaltung des Kopplungsbereichs als Perforation wird ein gleichbleibender Durchströmungsquerschnitt des Hohlquerschnitts sichergestellt, so dass nur ein sehr geringer Einfluss auf den Durchströmungswiderstand entsteht. Ferner ermöglicht die Perforation die Ausgestaltung der Dissipationsstruktur als Schüttung, sofern die Korngröße der Schüttung größer ist als die Öffnungsweite der Perforation. Ebenso ist es auch bei einer Ausgestaltung des Kopplungsbereichs als Perforation möglich, die Dissipationsstruktur selbsttragend auszugestalten.

Bei einer zweiten prinzipiellen Ausführungsform kann der Kopplungsbereich für die Flüssigkeit undurchlässig ausgestaltet sein. In diesem Fall weist der Kopplungsbereich im Bereich der Wand des Hohlquerschnitts eine schwingungsfähige elastische Struktur auf und die Dämpfungsstruktur ist in diesem Fall zweckmäßig als Kompressionsstruktur ausgestaltet. Durch die schwingungsfähige elastische Struktur lassen sich die Druckschwingungen von der Flüssigkeit auf die Kompressionsstruktur übertragen. Die Kompressionsstruktur ist kompressibel und kann dementsprechend komprimiert werden und expandieren. Zumindest bei der Kompression der Kompressionsstruktur wird Druckenergie in Wärme umgesetzt. Auf diese Weise können die Druckschwingungen durch die Kompressionsstruktur bedämpft werden.

Durch den für die Flüssigkeit undurchlässigen Kopplungsbereich ist in diesem Fall die Dämpfungsstruktur bezüglich der im Hohlquerschnitt geführten Flüssigkeit trocken angeordnet.

Entsprechend einer zweckmäßigen Weiterbildung kann die Wand des Hohlquerschnitts im Kopplungsbereich als schwingungsfähige Membran ausgestaltet sein. Die schwingungsfähige Membran unterscheidet sich von der übrigen Wand des Hohlquerschnitts z.B. durch eine reduzierte Wandstärke. Insbesondere beträgt die Wandstärke der Membran dann maximal 50% oder maximal 25% oder maximal 10% der Wandstärke der Wand des Hohlquerschnitts außerhalb des Kopplungsbereichs. Zusätzlich oder alternativ kann die schwingungsfähige Membran aus einem anderen Werkstoff hergestellt sein als die Wand des Hohlquerschnitts außerhalb des Kopplungsbereichs. Hierdurch kann durch geeignete Materialauswahl die Membran mit der gewünschten Schwingungsfähigkeit bei ausreichender Druckstabilität ausgestattet werden.

Gemäß einer anderen vorteilhaften Weiterbildung kann die Kompressionsstruktur durch eine Füllung aus einem kompressiblen Medium gebildet sein, wobei es sich bei diesem kompressiblen Medium bevorzugt um ein Gas handelt. In diesem Fall wirkt die Kompressionsstruktur wie eine Gasfeder, so dass die Dämpfungswirkung hauptsächlich über die Elastizität der Membran bzw. über die unvermeidlichen Reibungsverluste durch die Deformation der Membran erzielt wird. Um hier die Dämpfungswirkung zu verstärken, kann im Bereich der Füllung mit dem kompressiblen Medium außerdem ein Füllstoff angeordnet sein, der die Membran an einer der im Hohlquerschnitt geführten Flüssigkeit abgewandten Seite abstützt. Dieser Füllstoff kann die gewünschte Dämpfungscharakteristik erfüllen. Beispielsweise kann der Füllstoff durch eine elastische offenporige oder geschlossenporige Porenstruktur oder Gewebestruktur oder Vliesstruktur gebildet sein.

Zusätzlich oder alternativ kann die Kompressionsstruktur durch eine elastische offenporige oder geschlossenporige Porenstruktur oder Gewebestruktur oder Vliesstruktur gebildet sein, die im Dämpfergehäuse insbesondere so angeordnet ist, dass die Membran an einer von der im Hohlquerschnitt geführten Flüssigkeit abgewandten Seite an der Kompressionsstruktur abgestützt ist. Druckschwingung, die zu einer Verformung der Membran führen, erzwingen dadurch ebenfalls eine Deformation der Kompressionsstruktur, wodurch jedoch die Deformation der Membran signifikant gedämpft wird.

Der Kopplungsbereich kann die gesamte Oberfläche des Hohlquerschnitts umfassen oder auch nur axiale oder radiale Teilabschnitte. Die Dissipationsstruktur und/oder die Kompressionsstruktur können als Einlegeteil eines in einem weiteren Gehäuse angeordneten flüssigkeitsführenden Hohlquerschnitts ausgestaltet sein.

Der Hohlquerschnitt kann rund oder eckig sein.

Bei einer weiteren vorteilhaften Weiterbildung kann das Dämpfergehäuse außerdem einen vorzugsweise ringförmigen Resonanzraum enthalten, der die Dämpfungsstruktur, also insbesondere die Dissipationsstruktur oder die Kompressionsstruktur umhüllt. Ein derartiger Resonanzraum kann bspw. mit einer zylindrischen perforierten Trennwand von der Dissipationsstruktur getrennt sein. Ebenso kann auf eine solche Trennwand verzichtet werden, wenn die Dissipationsstruktur selbsttragend ausgestaltet ist. Der Resonanzraum kann ebenfalls von der Flüssigkeit ausgefüllt sein. Die Druckschwingung können durch die Dämpfungsstruktur hindurch bis in den Resonanzraum gelangen und dort zusätzlich durch Resonanzeffekte bedämpft werden. Ebenfalls kann im Resonanzraum eine Reflexion der Druckschwingung zurück zur Dämpfungsstruktur erfolgen. Mit Hilfe eines derartigen Resonanzraums lässt sich die Dämpfungswirkung des Druckschwingungsdämpfers verbessern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen halben Längsschnitt eines Druckschwingungsdämpfers,
- Fig. 2: einen halben Längsschnitt wie in Fig. 1, jedoch bei einer anderen Ausführungsform,
- Fig. 3: einen Querschnitt des Druckschwingungsdämpfers gemäß Schnittlinien III in Fig. 2,
- Fig. 4: einen Längsschnitt des Druckschwingungsdämpfers, jedoch bei einer weiteren Ausführungsform,
- Fig. 5: einen Schnitt durch ein Filtergehäuse mit integriertem Druckschwingungsdämpfer,
- Fig. 6: einen Schnitt durch ein Ölfiltermodul mit integriertem Druckschwingungsdämpfer,
- Fig.7: eine Außenansicht des Ölfiltermoduls aus Fig. 6,
- Fig. 8: eine schematisierte Darstellung eines Flüssigkeitskreislaufs für Schmieröle oder Kraftstoffe in einem Kraftfahrzeug.

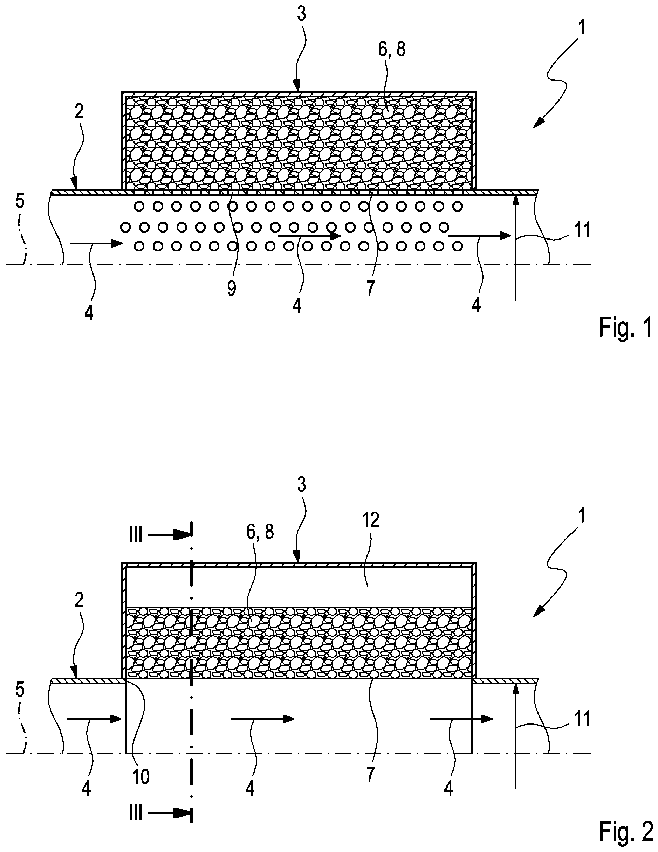

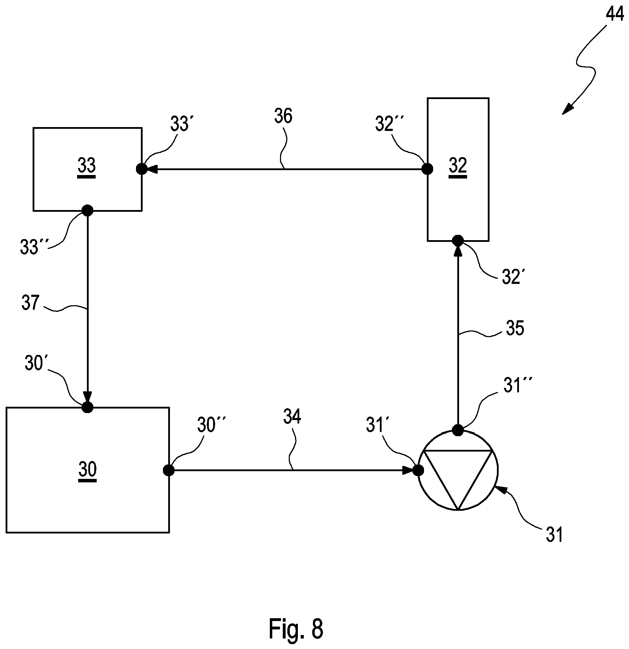

Entsprechend den Fig. 1 bis 4 umfasst ein Druckschwingungsdämpfer 1 einen flüssigkeitsführenden Hohlquerschnitt 2 beispielsweise ein Rohr das eine Zuleitung gemäß Fig. 8 darstellt und ein Dämpfergehäuse 3. Der Druckschwingungsdämpfer 1 ist für eine Verwendung in einem Flüssigkeitskreis, vorzugsweise in einem Ölkreis, Hydraulikkreis und insbesondere in einem Schmierölkreis vorgesehen. Der jeweilige Flüssigkeitskreis kann dabei zweckmäßig zu einer Brennkraftmaschine gehören bzw. in einem Kraftfahrzeug ausgebildet sein. Insbesondere kann es sich beim Flüssigkeitskreis um einen Schmierölkreis einer Brennkraftmaschine handeln, die insbesondere in einem Kraftfahrzeug angeordnet sein kann.

Der Druckschwingungsdämpfer 1 kann auch in anderen flüssigkeitsführenden Systemen in einer mobilen oder stationären Brennkraftmaschine eingesetzt werden, wie z.B. im Kraftstoffsystem, im Klimasystem, sowie im Kühlmittelsystem.

Der Hohlquerschnitt 2 dient zum Führen einer Flüssigkeit 4, die in den Figuren durch Pfeile angedeutet ist. Ferner dient der Hohlquerschnitt 2 zum Einbinden des Druckschwingungsdämpfers 1 in besagten Flüssigkeitskreis, derart, dass der Hohlquerschnitt 2 des Druckschwingungsdämpfers 1 einen Leitungsabschnitt des jeweiligen Flüssigkeitskreises oder Flüssigkeitssystems bildet.

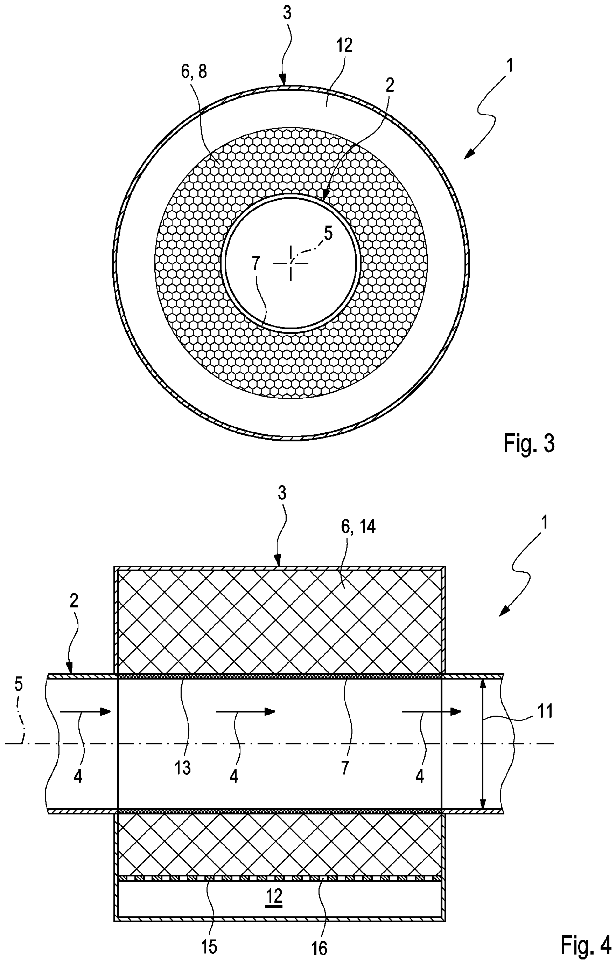

Im Beispiel ist der Hohlquerschnitt 2 geradlinig ausgeführt, so dass er eine Längsmittelachse 5 besitzt. Es ist klar, dass grundsätzlich auch gekrümmte Ausführungsformen denkbar sind. Ferner besitzt der Hohlquerschnitt 2 gemäß Fig. 3 zweckmäßig einen kreisförmigen Querschnitt. Es ist klar, dass grundsätzlich auch andere runde oder eckige Querschnitte für den Hohlquerschnitt 2 vorstellbar sind.

Das Dämpfergehäuse 3 umhüllt den Hohlquerschnitt 2 zumindest in einem Längsabschnitt und in der Umfangsrichtung zumindest teilweise. Zweckmäßig umhüllt das Dämpfergehäuse 3 den Hohlquerschnitt 2 in der Umfangsrichtung geschlossen umlaufend. Gemäß Fig. 3 besitzt das Dämpfergehäuse 3 hier ebenfalls einen kreisförmigen Querschnitt. Auch hier ist klar, dass auch für das Dämpfergehäuse 3 andere Querschnitte vorstellbar sind, die dem Querschnitt des Hohlquerschnitts 2 geometrisch ähnlich sein können, jedoch nicht müssen.

Das Dämpfergehäuse 3 enthält eine Dämpferstruktur 6. Dabei ist die Dämpferstruktur 6 im Dämpfergehäuse 3 so positioniert, dass sie nicht in den Hohlquerschnitt 2 hineinragt, sondern außerhalb des Hohlquerschnitts 2 liegt.

Der Hohlquerschnitt 2 weist nun innerhalb des Dämpfergehäuses 3 einen Kopplungsbereich 7 auf. Dieser Kopplungsbereich 7 ist so konzipiert, dass er eine Übertragung von Druckschwingungen von der Flüssigkeit 4 auf die Dämpferstruktur 6 ermöglicht.

Die Fig. 1 bis 3 zeigen nun eine erste grundsätzliche Ausführungsform des Druckschwingungsdämpfers 1, wobei Fig. 1 eine erste Variante und die Fig. 2 und 3 eine zweite Variante dieser ersten grundsätzlichen Ausführungsform zeigen. Im Unterschied dazu zeigt Fig. 4 zwei Varianten einer zweiten grundsätzlichen Ausführungsform des Druckschwingungsdämpfers 1.

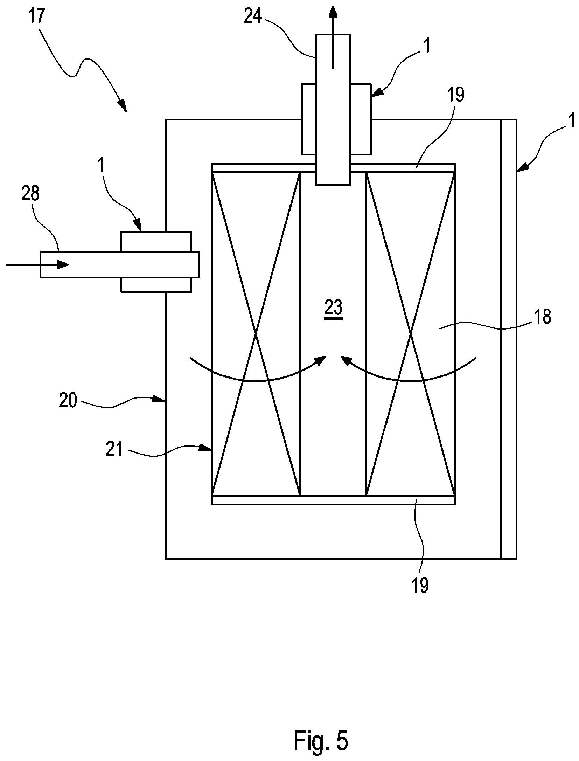

In den Figuren 5 bis 8 ist die Verwendung des Druckschwingungsdämpfers 1 an einzelnen Beispielen gezeigt.

Bei den in den Fig. 1 bis 3 gezeigten Ausführungsformen ist der Kopplungsbereich 7 für die Flüssigkeit 4 durchlässig ausgestaltet. Somit gelangt die Flüssigkeit 4 durch den Kopplungsbereich 7 in das Innere des Dämpfergehäuses 3, so dass die Dämpferstruktur 6 bei diesen Ausführungsformen nass angeordnet ist. Die Dämpferstruktur 6 ist hier als Dissipationsstruktur 8 ausgestaltet, in welche die Druckschwingungen eindringen können und darin durch zahllose Reflexionen mehr oder minder aufgezehrt werden. Dementsprechend ist die Dissipationsstruktur 8 von der Flüssigkeit 4 umgeben bzw. durchsetzt. Zweckmäßig ist die Dissipationsstruktur 8 durch eine offenporige Porenstruktur gebildet, die bspw. durch eine Kugelstruktur oder durch eine Hohlkugelstruktur, insbesondere mit offenen Hohlkugeln, oder durch eine Schaumstruktur oder durch eine Zellstruktur gebildet sein kann. Eine derartige Dissipationsstruktur 8 lässt sich bspw. durch Sintern oder durch Schäumen aus Kunststoff oder Metall herstellen. In den Fig. 1 und 2 ist die Dissipationsstruktur 8 rein exemplarisch als Hohlkugelstruktur dargestellt. In Fig. 3 ist die Dissipationsstruktur 8 vereinfacht als Schaumstruktur dargestellt.

Bei der in Fig. 1 gezeigten Ausführungsform ist der Kopplungsbereich 7 durch eine Perforation 9 gebildet. Die Dissipationsstruktur 8 kann in diesem Fall als lose Schüttung das Innere des Dämpfergehäuses 3 ausfüllen. Alternativ kann es sich bei der Dissipationsstruktur 8 auch um eine selbsttragende Struktur handeln.

Bei der in Fig. 2 gezeigten Ausführungsform ist der Kopplungsbereich 7 durch eine Unterbrechung 10 des Hohlquerschnitts 2 gebildet. In diesem Fall ist die Dissipationsstruktur 8 selbsttragend ausgestaltet. Ferner ist hier vorgesehen, dass die Dissipationsstruktur 8 an ihrer dem Kopplungsbereich 7 zugewandten Innenkontur im Wesentlichen einen durchströmbaren Querschnitt 11 des Hohlquerschnitts 2 kontinuierlich weiterbildet oder nachempfindet, so dass die Dissipationsstruktur 8 im Bereich der Unterbrechung 10, also im Kopplungsbereich 7 die Führungsfunktion des Hohlquerschnitts 2 für die Flüssigkeit 4 übernimmt.

Im Unterschied dazu bleibt diese Führungsfunktion bei der in Fig. 1 gezeigten Ausführungsform durch die Perforation 9 bei der Wand des Hohlquerschnitts 2 erhalten.

Bei der in den Fig. 2 und 3 gezeigten Ausführungsform enthält das Dämpfergehäuse 3 außerdem einen Resonanzraum 12, der die Dissipationsstruktur 8 in der Umfangsrichtung geschlossen umhüllt und vorzugsweise zylindrisch ausgebildet ist. Sofern es sich wie bei der in den Fig. 2 und 3 gezeigten Ausführungsform bei der Dissipationsstruktur 8 um eine selbsttragende Struktur handelt, ist der Resonanzraum 12 radial innen durch die Außenkontur der Dissipationsstruktur 8 begrenzt. Ebenso ist grundsätzlich eine Ausführungsform denkbar, bei welcher eine Trennwand im Dämpfergehäuse 3 angeordnet ist, die sich entlang der Außenkontur der Dissipationsstruktur 8 in der Umfangsrichtung erstreckt und insbesondere geschlossen umläuft. Diese Trennwand ist dann zweckmäßig perforiert, damit die Druckschwingung von der Dissipationsstruktur 8 in den Resonanzraum 12 gelangen können.

Bei der in Fig. 4 gezeigten Ausführungsform ist der Kopplungsbereich 7 für die Flüssigkeit 4 undurchlässig ausgestaltet. Hierzu weist der Kopplungsbereich 7 zumindest eine schwingungsfähige, elastische und für die Flüssigkeit 4 undurchlässige Struktur 13 auf. Diese elastische Struktur 13 erstreckt sich innerhalb des Dämpfergehäuses 3 zumindest über einen Teil der axialen Erstreckung des Hohlquerschnitts 2 sowie zumindest über einen Teil des Umfangs des Hohlquerschnitts 2. Insbesondere erstreckt sich die elastische Struktur 13 ringförmig geschlossen. Optional erstreckt sich die elastische Struktur 13 in der Längsrichtung des Hohlquerschnitts 2 über einen wesentlichen Anteil, also über mindestens 50%, vorzugsweise über den gesamten innerhalb des Dämpfergehäuses 3 liegenden Abschnitt des Hohlquerschnitts 2.

Die Dämpfungsstruktur 6 ist bei dieser Ausführungsform als Kompressionsstruktur 14 ausgestaltet. Druckschwingungen, die sich in der Flüssigkeit 4 ausbreiten, führen zu einer Deformation der elastischen Struktur 13, die zu einer Kompression der Kompressionsstruktur 14 führt. Hierbei wird Energie aufgezehrt, was die gewünschte Dämpfung bewirkt.

Der Kopplungsbereich 7 bzw. die elastische Struktur 13 ist zweckmäßig als schwingungsfähige Membran ausgestaltet, die im Folgenden ebenfalls mit 13 bezeichnet wird. Wie erwähnt, erstreckt sich die Membran 13 entlang eines Teils einer Wand des Hohlquerschnitts 2. Vorzugsweise ist der Hohlquerschnitt 2 zylindrisch ausgebildet, die Membran 13, kann jedoch ein Segment des zylindrischen Hohlquerschnitts 2 einschließen.

Bei der hier gezeigten Ausführungsform ist die Kompressionsstruktur 14 durch eine elastische Porenstruktur oder Gewebestruktur oder Vliesstruktur gebildet, die offenporig oder geschlossenporig konzipiert sein kann und die sich einfach elastisch verformen lässt und dabei Energie aufnimmt. Alternativ kann es sich bei der Kompressionsstruktur 14 auch um eine Gasfüllung handeln, die insbesondere durch einen Füllstoff verstärkt sein kann. Dieser Füllstoff entspricht dann weitgehend der stofflichen, also nicht gasförmigen Kompressionsstruktur 14 der hier gezeigten Ausführungsform.

Die Kompressionsstruktur 14 füllt in der ersten Variante, die in Fig. 4 oberhalb der Längsmittelachse 5 dargestellt ist, das Innere des Dämpfergehäuses 3 vollständig aus, so dass die Kompressionsstruktur 14 innen an der Membran 13 und außen am Dämpfergehäuse 3 zur Anlage kommt, so dass die Membran 13 über die Kompressionsstruktur 14 am Dämpfergehäuse 3 abgestützt ist. Bei hinreichender Fixierung der Kompressionsstruktur 14 ist es gemäß der in Fig. 4 unterhalb der Längsmittelachse 5 dargestellten zweiten Variante hier ebenso möglich, im Dämpfergehäuse 3 einen Resonanzraum 12 unterzubringen, der die Kompressionsstruktur 14 umhüllt. Beispielsweise kann hierzu eine Trennwand 15 im Dämpfergehäuse 3 angeordnet sein, beispielsweise schwingungsfähig ausgestaltet sein kann oder mit einer Perforation 16 ausgestattet sein kann. Der Resonanzraum 12 kann mit einem Gas befüllt sein.

Durch die flüssigkeitsdichte Ausgestaltung des Kopplungsbereichs 7 ist die Dämpfungsstruktur 6 bezüglich der Flüssigkeit 4 hier trocken angeordnet. Hierdurch sind auch Werkstoffe für die Kompressionsstruktur 14 verwendbar, die durch die Flüssigkeit 4 beschädigt werden könnten und bei den Varianten der Fig. 1 bis 3 aufgrund der Durchlässigkeit des Kopplungsbereichs 7 nicht verwendbar sind.

In der Fig. 5 ist ein Schnitt durch eine beliebige Filtereinrichtung 17 mit einem Filtergehäuse 20 und einem Filterelement 21 gezeigt. Der Druckschwingungsdämpfer 1 ist hier beispielhaft in den Zu- 28 und Ableitungen 24 der Flüssigkeit angedeutet. Die hier skizzierte Filtereinrichtung 17 hat in der Seitenwand des Filtergehäuses 20 den Zulauf 28 für die zu filternde Flüssigkeit. In die Wandung kann nun an dieser Stelle der Druckschwingungsdämpfer 1 gemäß einem vorherigen Beispiel der Fig. 1 bis 4 eingebaut sein. Das hat den Vorteil, dass ein Filtermedium 18" des Filterelementes 21 den auftretenden Druckschwingungen kaum noch ausgesetzt ist und daher einen geringeren Verschleiß hat.

Das Filterelement 21 umfasst üblicherweise eine obere und eine untere Endscheibe 19 sowie das dazwischen liegende Filtermedium 18. Vorzugsweise ist das Filterelement 21 von außen nach innen durchströmt, es kann aber natürlich auch andersrum durchströmt werden.

Über die Reinseite 23 strömt die gereinigte Flüssigkeit durch die Ableitung 24 weiter zum Beispiel in Richtung Motor. Auch in der Ableitung 24 kann wie in Fig. 5 skizziert zusätzlich oder alternativ ein Druckschwingungsdämpfer 1 angeordnet sein.

Des Weiteren kann ein Druckschwingungsdämpfer 1 auch in das Filtergehäuse 20 selbst integriert sein, entweder voll umfänglich oder nur über einen geeigneten Teilbereich.

Der Aufbau der Filtereinrichtung 17 ist bewusst skizzenhaft gewählt, weil es nicht um den detaillierten Aufbau der Filtereinrichtung 17 selbst geht, sondern um die sinnvolle und praktikable Verwendung eines Druckschwingungsdämpfers 1 in Komponenten eines Flüssigkeitssystems einer Brennkraftmaschine.
Die Pfeile sollen die Strömung der Flüssigkeit durch die Filtereinrichtung darstellen.

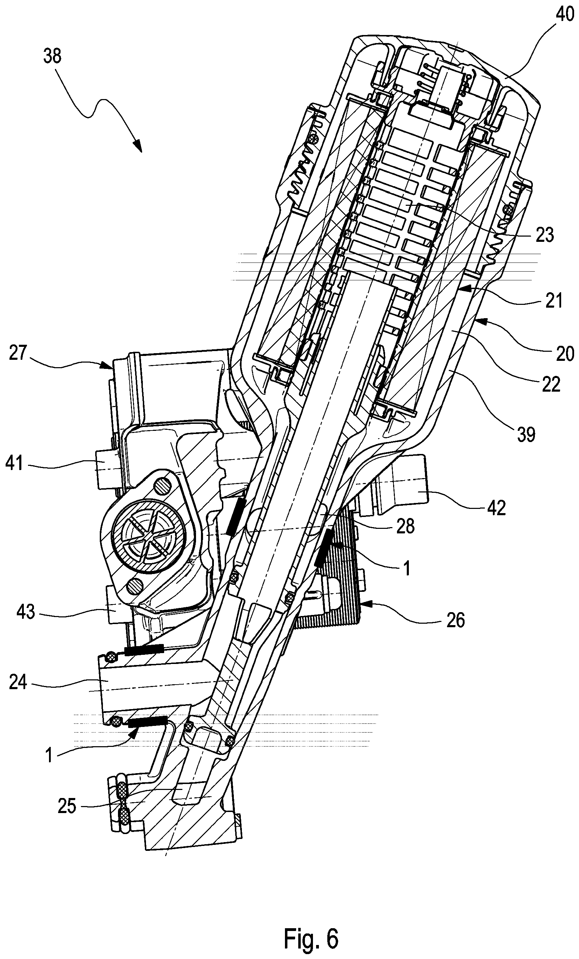

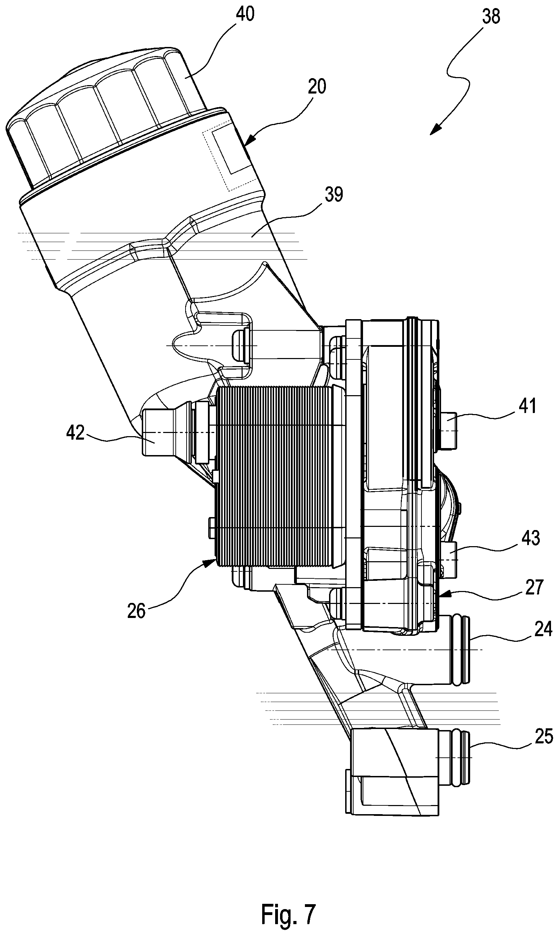

Daher sind auch die detailreicheren Fig. 6 und 7 nicht so zu verstehen, dass nur in genau der dargestellten Art ein Druckschwingungsdämpfer 1 in ein hier gezeigtes Ölfiltermodul 38 eingebaut werden kann.

Fig. 6 zeigt einen Schnitt durch ein Ölfiltermodul 38, insbesondere für Schmieröl für einen Verbrennungsmotor. Es umfasst ein Filtergehäuse 20 mit einem Topf 39 und einem damit verbundenen Deckel 40. Im Innern ist ein Filterelement 21 angeordnet. Das Filterelement 21 trennt eine Rohseite 22 von einer Reinseite 23. Es gibt einen rohseitigen Zulauf 28 und einen reinseitigen Ablauf 24 sowie einen Leerlauf 25. Der Reinraum 23 ist mit dem Ablauf 24 verbunden und bei fehlendem Filterelement 21 mit dem Leerlauf 25 verbunden. Das Ölfiltermodul 38 weist zudem einen Ölkühler 26 sowie ein Trägerteil 27 auf. Das Filtergehäuse 20 kann Teil des Trägerteils 27 sein. An dem Trägerteil 27 ist der Ölkühler 26 befestigt.

Weiter erkennbar sind Anschlüsse 41 und 42 für Kühlmittel am Trägerteil 27 bzw. am Ölkühler 26 sowie ein Anschluss 43 für das von der Brennkraftmaschine kommende, zu kühlende und zu filternde Öl.

Zumindest der Zulauf 28, optional z.B. auch der Ablauf 24, ist hier Teil des Trägerteils 27. So dass sinnvolle Positionen für einen oder mehrere Druckschwingungsdämpfer 1 zum einen in dem Trägerteil 27 im Bereich des Zulaufs 28 oder z.B. im Bereich des Ablaufs 24 sind. Alternativ können auch in weiteren flüssigkeitsführenden Hohlquerschnitten im Trägerteil 27 und/oder am Ölkühler 26 und/oder am Ölfilter 21 solche Druckschwingungsdämpfer 1 vorgesehen werden (nicht gezeigt).

Die Fig. 7 stellt lediglich eine Außenansicht des in Fig. 6 dargestellten Ölfiltermoduls 38 dar, wobei hier der Ölkühler 26 sowie das Trägerteil 27 besser zu sehen sind. Mittels des Trägerteils 27, das die Anschlüsse 41, 43 für den Ölkühler 26 und den Ölfilter 20 enthält, wird das Ölfiltermodul 38 an einem Motorgehäuse (nicht gezeigt) befestigt. Alternativ zur gezeigten Anordnung in Fig.7 können ein oder mehrere Druckschwingungsdämpfer 1 auch auf der Seite des Motorgehäuses in den Zuleitungen angeordnet sein.

Um zu verdeutlichen, an welchen Stellen ein oder mehrere Druckschwingungsdämpfer 1 in ein Flüssigkeitssystem integriert sein können, ist die Fig.8 gedacht. Gezeigt ist ein beliebiges Flüssigkeitssystem 44. Es weist ein Reservoir 30, eine Fördereinrichtung 31, eine Filtereinrichtung 32 sowie einen Verbraucher 33 auf. Zwischen den einzelnen Komponenten 30, 31, 32 und 33 dieses Flüssigkeitssystems 44 befinden sich mindestens die skizzierten Verbindungsleitungen 34, 35, 36 und 37. Diese sind mit den Komponenten 30, 31, 32, 33 an den als Punkten dargestellten Stellen 30', 30", 31',31", 32', 32", 33' und 33" verbunden. Die mit einem Strich (') gekennzeichneten Stellen sind die Zuläufe zu den jeweiligen dazugehörigen Komponenten und die mit zwei Strichen (") gekennzeichneten Stellen sind die jeweiligen Abläufe.

Die Verbindungsleitungen 34, 35, 36, 37 können in Form von Schläuchen realisiert werden oder durch Kanäle in den Gehäusen der einzelnen Komponenten 30, 31, 32, 33.

An all den Stellen die mit den Punkten markiert sind, können ein oder mehrere erfindungsgemäße Druckschwingungsdämpfer 1 eingesetzt werden.

Bei dem Flüssigkeitssystem 44 kann es sich um ein Schmierölsystem handeln. Dann ist das Reservoir 30 der Öltank, die Fördereinrichtung 31 die Ölförderpumpe, die Filtereinrichtung 32 der Ölfilter plus Ölkühler plus Trägerteil und der Verbraucher 33 der Motor.

Bei einem alternativen Flüssigkeitssystem 44 kann es sich um ein Kraftstoffsystem handeln, dann ist das Reservoir 30 der Kraftstofftank, die Fördereinrichtung 31 die Vor- und die Hauptförderpumpe, die Filtereinrichtung 32 der Kraftstofffilter und der Verbraucher 33 der Motor.

Bei einem alternativen Flüssigkeitssystem 44 kann es sich um einen Klimakreislauf handeln, dann ist das Reservoir 30 das Kältemittelreservoir, die Fördereinrichtung 31 der Kompressor, die Filtereinrichtung 32 ein Sieb in einem der Wärmetauscher des Klimakreislaufs und der Verbraucher 33 ein weiterer Wärmetauscher des Klimakreislaufs oder ein Ventil des Klimakreislaufs.

Den Beispielen aus den Figuren 5 bis 8 ist gemein, dass die Druckschwingungsdämpfer 1 beispielsweise als Einlegeteile in vorgefertigte Aussparungen eingesetzt werden können und mit dem weiteren Gehäuse fest verbunden sind.

## Patentansprüche

1. Filtereinrichtung (21) für einen Schmierölkreis (44) einer Brennkraftmaschine, mit einem Filtergehäuse (20), das eine Flüssigkeitsleitung aufweist und in das ein Druckschwingungsdämpfer (1) integriert ist,
- wobei der Druckschwingungsdämpfer (1) einen Hohlquerschnitt (2) zum Führen der Flüssigkeit (4) und zum Einbinden des Druckschwingungsdämpfers (1) in die Flüssigkeitsleitung aufweist,
- wobei der Druckschwingungsdämpfer (1) ein den Hohlquerschnitt (2) umhüllendes Dämpfergehäuse (3) aufweist, das eine außerhalb des Hohlquerschnitts (2) liegende Dämpferstruktur (6) enthält,
- wobei der Hohlquerschnitt (2) innerhalb des Dämpfergehäuses (3) einen Kopplungsbereich (7) aufweist, der eine Übertragung von Druckschwingungen von der Flüssigkeit (4) auf die Dämpferstruktur (6) ermöglicht.

2. Filtereinrichtung nach Anspruch 1,
**dadurch gekennzeichnet,**
- **dass** der Kopplungsbereich (7) für die Flüssigkeit (4) durchlässig ist,
- **dass** die Dämpferstruktur (6) als Dissipationsstruktur (8) ausgestaltet ist, die von der Flüssigkeit (4) umgeben und/oder durchsetzt ist.

3. Filtereinrichtung nach Anspruch 2,
**dadurch gekennzeichnet,**
**dass** die Dissipationsstruktur (8) eine offenporige Porenstruktur ist.

4. Filtereinrichtung nach Anspruch 3,
**dadurch gekennzeichnet,**
**dass** die Porenstruktur eine Kugelstruktur oder eine Hohlkugelstruktur oder eine Schaumstruktur oder eine Zellstruktur ist.

5. Filtereinrichtung nach einem der Ansprüche 2 bis 4,
**dadurch gekennzeichnet,**
**dass** der Kopplungsbereich (7) durch eine Unterbrechung (10) des Hohlquerschnitts (2) gebildet ist, wobei die Dissipationsstruktur (8) selbsttragend ausgestaltet ist.

6. Filtereinrichtung nach einem der Ansprüche 2 bis 4,
**dadurch gekennzeichnet,**
**dass** der Kopplungsbereich (7) durch eine Perforation (9) gebildet ist.

7. Filtereinrichtung nach Anspruch 1,
**dadurch gekennzeichnet,**
- **dass** der Kopplungsbereich (7) für die Flüssigkeit (4) undurchlässig ausgestaltet ist,
- **dass** der Kopplungsbereich (7) eine schwingungsfähige elastische Struktur (13) aufweist,
- **dass** die Dämpfungsstruktur (6) als Kompressionsstruktur (14) ausgestaltet ist.

8. Filtereinrichtung nach Anspruch 7,
**dadurch gekennzeichnet,**
**dass** der Kopplungsbereich (7) als schwingungsfähige Membran (13) ausgestaltet ist.

9. Filtereinrichtung nach Anspruch 7 oder 8,
**dadurch gekennzeichnet,**
**dass** die Kompressionsstruktur (14) durch eine Füllung aus einem kompressiblen Medium gebildet ist, das insbesondere durch ein Gas gebildet ist.

10. Filtereinrichtung nach einem der Ansprüche 7 bis 9,
**dadurch gekennzeichnet,**
**dass** die Kompressionsstruktur (14) durch eine elastische Porenstruktur oder durch eine elastische Gewebestruktur oder durch eine elastische Vliesstruktur gebildet ist.

11. Filtereinrichtung nach einem der Ansprüche 1 bis 10,
**dadurch gekennzeichnet,**
**dass** das Dämpfergehäuse (3) außerdem einen Resonanzraum (12) enthält, der die Dämpferstruktur (6), insbesondere die Dissipationsstruktur (8) oder die Kompressionsstruktur (14), umhüllt.

## Claims

1. Filtering device (21) for a lubricating oil circulation (44) of a combustion engine, with a filter housing (20) comprising a fluid line and in which a pressure oscillation damper (1) is integrated,
- wherein the pressure oscillation damper (1) comprises a hollow cross-section (2) for guiding the fluid (4) and for integrating the pressure oscillation damper (1) in the fluid line,
- wherein the pressure oscillation damper (1) comprises a damper housing (3) surrounding the hollow cross-section (2), the damper housing comprising a damper structure (6) lying outside the hollow cross-section (2),
- wherein the hollow cross-section (2) within the damper housing (3) comprises a coupling area (7) which allows a transmission of pressure oscillations from the fluid (4) to the damper structure (6).

2. Filtering device according to claim 1,
**characterized in that**
- the coupling area (7) is permeable to the fluid (4),
- the damper structure (6) is formed as dissipation structure (8) which is surrounded and/or penetrated by the fluid (4).

3. Filtering device according to claim 2,
**characterized in that**
the dissipation structure (8) is a pore structure with open pores.

4. Filtering device according to claim 3,
**characterized in that**
the pore structure is a spherical structure or a hollow spherical structure or a foam structure or a cell structure.

5. Filtering device according to any of claims 2 to 4,
**characterized in that**
the coupling area (7) is formed by a discontinuity (10) in the hollow cross-section (2), wherein the dissipation structure (8) is self-supporting.

6. Filtering device according to any of claims 2 to 4,
**characterized in that**
the coupling area (7) is formed by a perforation (9).

7. Filtering device according to claim 1,
**characterized in that**
- the coupling area (7) is impermeable to the fluid (4),
- the coupling area (7) has an oscillatory elastic structure (13),
- the damper structure (6) is formed as a compression structure (14).

8. Filtering device according to claim 7,
**characterized in that**
the coupling area (7) is formed as an oscillatory membrane (13).

9. Filtering device according to claim 7 or 8,
**characterized in that**
the compression structure (14) is formed by a filling of a compressible medium which is in particular formed by a gas.

10. Filtering device according to any of claims 7 to 9,
**characterized in that**
the compression structure (14) is formed by an elastic pore structure or an elastic fabric structure or by an elastic non-woven structure.

11. Filtering device according to any of claims 1 to 10,
**characterized in that**
the damper housing (3) further comprises a resonance chamber (12) surrounding the damper structure (6), in particular the dissipation structure (8) or the compression structure (14).

## Revendications

1. Dispositif de filtration (21) pour un circuit d'huile de lubrification (44) d'un moteur à combustion interne, avec un boîtier de filtre (20), qui présente une conduite de fluide et dans lequel un amortisseur de vibrations de pression (1) est intégré,
- dans lequel l'amortisseur de vibrations de pression (1) présente une section transversale creuse (2) pour le guidage du fluide (4) et pour l'intégration de l'amortisseur de vibrations de pression (1) dans la conduite de fluide,
- dans lequel l'amortisseur de vibrations de pression (1) présente un boîtier d'amortisseur (3) enveloppant la section transversale creuse (2), qui contient une structure d'amortisseur (6) située en dehors de la section transversale creuse (2),
- dans lequel la section transversale creuse (2) présente à l'intérieur du boîtier d'amortisseur (3) une zone de couplage (7), qui permet une transmission de vibrations de pression du fluide (4) à la structure d'amortisseur (6).

2. Dispositif de filtration selon la revendication 1,
**caractérisé en ce**
- **que** la zone de couplage (7) est perméable au fluide (4),
- **que** la structure d'amortisseur (6) est configurée comme une structure de dissipation (8) qui est entourée et/ou chargée du fluide (4).

3. Dispositif de filtration selon la revendication 2,
**caractérisé en ce**
**que** la structure de dissipation (8) est une structure de pores à pores ouvertes.

4. Dispositif de filtration selon la revendication 3,
**caractérisé en ce**
**que** la structure de pores est une structure sphérique ou une structure sphérique creuse ou une structure en mousse ou une structure cellulaire.

5. Dispositif de filtration selon l'une quelconque des revendications 2 à 4,
**caractérisé en ce**
**que** la zone de couplage (7) est formée par une interruption (10) de la section transversale creuse (2), dans lequel la structure de dissipation (8) est configurée de manière autoportante.

6. Dispositif de filtration selon l'une quelconque des revendications 2 à 4,
**caractérisé en ce**
**que** la zone de couplage (7) est formée par une perforation (9).

7. Dispositif de filtration selon la revendication 1,
**caractérisé en ce**
- **que** la zone de couplage (7) est configurée de manière imperméable au fluide (4),
- **que** la zone de couplage (7) présente une structure élastique vibrante (13),
- **que** la structure d'amortissement (6) est configurée comme une structure de compression (14).

8. Dispositif de filtration selon la revendication 7,
**caractérisé en ce**
**que** la zone de couplage (7) est configurée comme une membrane vibrante (13).

9. Dispositif de filtration selon la revendication 7 ou 8,
**caractérisé en ce**
**que** la structure de compression (14) est formée par un remplissage en un milieu compressible, qui est formé en particulier par un gaz.

10. Dispositif de filtration selon l'une quelconque des revendications 7 à 9,
**caractérisé en ce**
**que** la structure de compression (14) est formée par une structure de pores élastique ou par une structure en tissu élastique ou par une structure en non-tissé élastique.

11. Dispositif de filtration selon l'une quelconque des revendications 1 à 10,
**caractérisé en ce**
**que** le boîtier d'amortisseur (3) contient en outre une chambre de résonance (12), qui enveloppe la structure d'amortisseur (6), en particulier la structure de dissipation (8) ou la structure de compression (14).
